Europäisches Patentamt

European Patent Office

Office européen des brevets

(11) Veröffentlichungsnummer: **0 262 320 B1**

(19)

(12) **EUROPÄISCHE PATENTSCHRIFT**

(45) Veröffentlichungstag der Patentschrift: **15.05.91**

(51) Int. Cl.⁵: **G11B 15/14**, //G11B15/18

(21) Anmeldenummer: **87110530.0**

(22) Anmeldetag: **21.07.87**

(54) Verfahren zur Erzeugung des Kopfumschaltsignales eines Videorecorders.

(30) Priorität: **29.08.86 DE 3629481**

(43) Veröffentlichungstag der Anmeldung:
**06.04.88 Patentblatt 88/14**

(45) Bekanntmachung des Hinweises auf die
Patenterteilung:
**15.05.91 Patentblatt 91/20**

(84) Benannte Vertragsstaaten:
**AT BE CH DE ES FR GB IT LI LU NL SE**

(56) Entgegenhaltungen:
**DE-A- 3 130 801**
**US-A- 3 934 264**

**IEEE TRANSACTIONS ON CONSUMER ELEC-
TRONICS, Band CE-27, Nr. 1, Februar 1981,
Seiten 71-78, IEEE, New York, US; Y. KOBORI
et al.: "One chip servo system LSI for home
VCR"**

**PATENT ABSTRACTS OF JAPAN, Band 1, Nr.
143, 22. November 1977, Seite 7099 E 77; &
JP-A-52 80 103 (MATSUSHITA DENKI SAN-
GYO K.K.) 05.07.1977**

**PATENT ABSTRACTS OF JAPAN, Band 2, Nr.
92, 28. Juli 1978, Seite 4213 E 78; & JP-A-53**

**55 104 (HITACHI DENSHI K.K.) 19.05.1978**

**PATENT ABSTRACTS OF JAPAN, Band 6, Nr.
16 (E-92)[894], 29. Januar 1982; & JP-A-56 136
090 (HITACHI SEISAKUSHO K.K.) 23-10-1981**

**PATENT ABSTRACTS OF JAPAN, Band 4, Nr.
62 (P-10)[544], 9. Mai 1980, Seite 156 P 10; &
JP-A-55 32 272 (SONY K.K.) 06-03-1980**

**PATENT ABSTRACTS OF JAPAN, Band 5, Nr.
36 (P-51)[708], 7. März 1981; & JP-A-55 157
142 (HITACHI SEISAKUSHO K.K.) 06-12-1980**

(73) Patentinhaber: **Deutsche Thomson-Brandt
GmbH**
**Hermann-Schwer-Strasse 3 Postfach 1307**
**W-7730 Villingen-Schwenningen(DE)**

(72) Erfinder: **Kaaden, Jürgen**
**Im Tannhörnle 10**
**W-7730 Villingen-Schwenningen(DE)**
Erfinder: **Link, Hermann**
**Augenmoosstrasse 10**
**W-7730 VS-Obereschach(DE)**

## Beschreibung

Die Erfindung betrifft ein Verfahren zur Erzeugung des Kopfumschaltsignales für Videorecorder mit einer von einem Magnetband tei lweise umschlungenen, Videoköpfe tragenden rotierenden Kopftrommel, mit mindestens einem auf der Kopftrommel sitzenden Impulsgeber und mindestens einem Meßfühler zur Erzeugung eines Kopfumschaltsignals, das die Umschaltung von einem Videokopf auf den anderen bewirkt, und mit einem Kontrollkopf zum Abtasten des Vertikalsynchronsignales bei Wiedergabe.

In Friedrich Manz, Videorecorder-Technik, Vogel-Verlag, 1979 sind die Grundlagen der Videotechnik erläutert.

Bei Studiogeräten werden die Videosignale in Querspuren nach dem Querschriftverfahren auf dem Magnetband aufgezeichnet, dagegen ist bei Heimgeräten die Schrägspuraufzeichnung anzutreffen, bei der die Videosignale in schrägen Spuren auf dem Magnetband aufgezeichnet sind. Der Ton wird jedoch in einer Längsspur aufgezeichnet.

Das Magnetband umschließt teilweise eine rotierende Kopftrommel, die bei den bekannten Videosystemen VHS, VCR und Betamax zwei Videoköpfe trägt, wie auf Seite 104 der angegebenen Literaturstelle beschrieben und auf Seite 105 in Bild 5.6 gezeigt ist.

Aus der DE-A-31 30 801 sind ein Verfahren und eine Schaltungsanordnung zur elektrischen Einstellung der Kopfradhöhe eines Videorecorders bekannt.

Weil die Kopfradhöhe bei einem Videorecorder in zeitraubender, mühsamer und sehr sorgfältiger Handarbeit eingestellt wird, ist es wünschenswert, diese schwierigen Einstellarbeiten zu automatisieren oder gänzlich einzusparen, um die Produktionskosten senken zu können.

Das Ziel, ohne Nachteile auf die Einstellung der Kopfradhöhe von Hand bei der Produktion eines Videorecorders verzichten zu können, wi rd in der DE-A-3 130 801 dadurch erreicht, daß die mechanische Restumschlingung des Kopfrades größer als die elektrische Umschlingung gewählt wird, damit ein sicherer Kontakt zwischen Band und Kopf erzielt wi rd. Bei Aufnahmebetrieb wird die Phasendifferenz zwischen dem Bi ldimpuls und den Impulsen, die ein Kopfradtachogenerator liefert, zur Verstellung der Mitte der Aufzei chnungshöhe der Videospuren eingestellt. Ähnlich wird bei Wiedergabebetrieb die Phasendifferenz zwischen dem Signal eines Oszillators und den Impulsen des Kopfradtachogenerators zur Verstellung der Aufzeichnungshöhe eingestellt. Das aus der DE-A-31 30 801 bekannte Verfahren hat einerseits den Vorteil, daß die Kopfradhöhe bei der Produktion eines Videorecorders nicht mehr von Hand eingestellt werden muß. Andererseits aber kann sich die Mitte der Aufzeichnungshöhe verstellen, wenn die Frequenz des Oszillators z.B. infolge von Temperaturschwankungen oder Alterung der Bauteile driftet.

Bei VCR-Videorecordern umschließt das Magnetband die Kopftrommel in einem 180° umfassenden Bereich, so daß keine Überlappungszonen entstehen. Weil, kurz bevor der eine Videokopf im Eingriff mit dem Magnetband steht, der andere den 180° umfassenden Bereich der Umschlingung verläßt, steht immer nur ein Videokopf im Eingriff mit dem Magnetband, deshalb besteht bei VCR-Videorecordern eine Lücke zwischen den Signalen der beiden Videoköpfe. Um diese Lücke zu vermeiden, wird bei Betamax-und VHS-Geräten der Bereich der Umschlingung des Magnetbandes größer als 180° gewählt, so daß eine Überlappungszone entsteht, deren Dauer etwa drei bis sechs Zeilen beträgt.

Bei allen drei beschriebenen Systemen, dem VCR-System, dem VHS-System und dem Betamax-System, treten beim Übergang vom einen Videokopf auf den anderen ohne besondere Maßnahmen folgende Schwierigkeiten auf: ohne Überlappung ist nur das Verstärkerrauschen wirksam, bei Uberlappung tritt durch Uberlagerung der von beiden Videoköpfen gelieferten Signale eine Erhöhung der Amplitude auf. Daher ist der Zeitpunkt, zu dem vom einen Videokopf auf den anderen umgeschaltet wird, genau festgelegt. Die Umschaltung vom einen Videokopf auf den anderen wird durch einen Impuls, der im weiteren Verlauf als Kopfumschaltimpuls bezeichnet wird, bewirkt. Der Kopfumschaltimpuls darf weder in den sichtbaren Teil des Bildes noch in den Bereich der Vertikalsynchronisation fallen. Im ersten Fall erscheint der Kopfumschaltimpuls als Phasensprung auf dem Bildschirm, im letzten Fall zittert das Bild, weil der Vertikalsychronimpuls gestört wird. Deshalb wird der Kopfumschaltimpuls in den nicht auf dem Bildschirm sichtbaren Teil des Bildes vor den Vertikalsynchronimpuls gelegt.

Beim VHS-System schreibt die Norm vor, den Kopfumschaltimpuls 6,5 Zeilen mit einer Toleranz von ± 1,5 Zeilen vor den Vertikalsynchronimpuls zu legen, der mittels eines Kontrollkopfes von einer separaten Kontrollspur, auf der im Längsspurverfahren aufgezeichnet wird, abgetastet wird. Im Gegensatz zum Vertikalsynchronimpuls ist der Kopfumschaltimpuls nicht auf dem Magnetband aufgezeichnet, sondern wird mittels eines Impulsgebers auf der Kopftrommel und eines neben der Kopftrommel angeordneten Meßfühlers erzeugt. Als Impulsgeber kann z.B. ein Magnet auf der Kopftrommel angebracht sein; als Meßfühler dient eine Spule, in der der Magnet eine Spannung induziert, aus der der Kopfumschaltimpuls abgeleitet wird. Die Kopftrommel kann mehrere Impulsgeber tragen, und es können auch mehrere Meßfühler vorgesehen sein.

Anstelle induktiver Impulsgeber und Meßfühler sind z.B. optische Sender und Empfänger gebräuchlich. Der Impulsgeber und der Meßfühler müssen ebenso wie der Kontrollkopf genau justiert sein, damit der Kopfumschaltimpuls im richtigen Augenblick erzeugt wird. Das allein genügt jedoch nicht, weil auch die Bandgeschwindigkeit, die Umdrehungsgeschwindigkeit der Kopftrommel und ihre augenblickliche Position den Zeitpunkt des Vertikalsynchronsignals und des Kopfumschaltimpulses mit bestimmen. Deshalb werden sowohl die Bandgeschwindigkeit als auch die Umdrehungsgeschwindigkeit samt Position der Kopftrommel mittels sogenannter Servoregelkreise geregelt, die ausserdem dafür sorgen, daß bei der Wiedergabe die Schrägspuren von den Videoköpfen genau abgetastet werden. Eine genaue Abtastung ist nötig, weil in den Schrägspuren das FBAS-Signal, das Vertikalsynchronsignal und das Horizontalsynchronsignal mit einer sehr geringen Spurbreite von z.B. nur 50 $\mu$m aufgezeichnet sind. Zur Einstellung des Kontrollkopfes, der die Steuersignale für den Bandservoregelkreis abnimmt, des Meßfühlers für den Kopfumschaltim puls und der auf den Meßfühler folgenden Schaltung zur Aufbereitung und Weiterleitung des Kopfumschaltimpulses wird ein sogenanntes Meßband, auf dem die Videound Vertikalsynchronsignale normgerecht aufgezeichnet sind, in den Videorecorder eingelegt. Weil die Flanken des vom Meßfühler gelieferten Kopfumschaltimpulses nicht genügend steil sind und ihre zeitliche lage ausserdem zu ungenau definiert ist, wird er in der auf den Meßfühler folgenden Schaltung aufbereitet, die einen sauberen Rechteckimpuls erzeugt. Die zeitliche Lage der Flanken des Kopfumschaltimpulses wird mittels des Meßbandes genau eingestellt.

Leider büßen aber als Impulsgeber dienende Magnete im Laufe der zeit an Feldstärke ein. Doch auch optische Impulsgeber und Meßfühler altern mit der Zeit, denn der Wirkungsgrad einer Leucht- oder Laserdiode - das ist das Verhältnis von abgegebener Lichtleistung zu aufgenommener elektrischer Leistung läßt allmählich ebenso nach, wie sich der Wirkungsgrad eines Phototransistors oder einer Photodiode - das ist das Verhältnis von abgegebener elektrischer Leistung zu empfangener Lichtleistung - verringert. Zudem verändert sich bei optischen Sendern und Empfängern die spektrale Empfindlichkeit.

Infolge dieser Alterung der Impulsgeber - bei optischen Systemen auch der Meßfühler - verschieben sich die Flanken des Kopfumschaltimpulses irgendwann soweit von der richtigen Lage, daß entweder der Kopfumschaltimpuls als Phasensprung auf den Bildschirm stört oder das Bild zum Zittern bringt.

Um wieder eine einwandfreie Wiedergabe des Bildes zu erzielen, ist ein Neuabgleich der auf den Meßfühler folgenden Schaltung zur Aufbereitung des Kopfumschltimpulses mittels des eingangs erwähnten Meßbandes nötig. Dieser Neuabgleich ist nicht nur für die Werkstatt aufwendig, sie ist auch für den Kunden ärgerlich, denn sie nimmt seine Zeit in Anspruch und kostet zudem Geld.

Es ist daher Aufgabe der Erifindung, einen Videorecorder so zu gestalten, daß Neueinstellungen infolge Alterung des Impulsgebers und des Meßfühlers zur Erzeugung des Kopfumschaltsignales überflüssig werden.

Die Erfindung löst diese Aufgabe dadurch, daß bei Wiedergabebetrieb die Zeit zwischen dem Meßfühler gelieferten Signal und dem Vertikalsynchronsignal gemessen und mit einem Sollwert verglichen wird und daß aus dem Vergleich ein Kriterium für die Regelung der zeitlichen Lage des Kopfumschaltsignales gewonnen wird.

Es zeigen

Figur 1      einen Videorecorder, in dem die Erfindung verwerklicht ist

Figur 2      die im Anspruch 2 beschriebene Schaltungsanordnung

Figur 3      ein Impulsdiagramm zur Erläuterung der Funktion des erfindungsgemäßen Videorecorders.

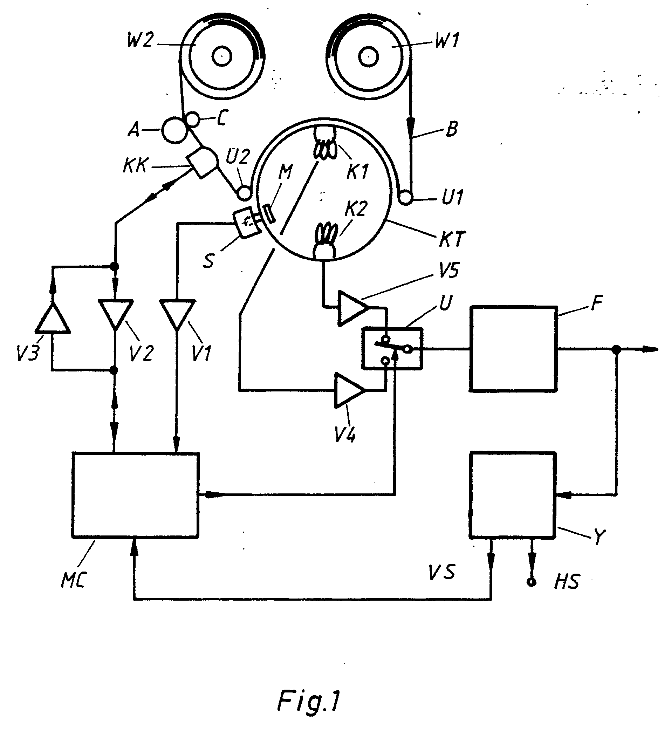

In Figur 1 ist gezeigt, wie das Magnetband B von einer Abwickelspule W1 über zwei Umlenkrollen U1 und U2 so um die Kopftrommel KT geführt ist, daß es sie in einem Bereich von mehr als 180° umschlingt. Von der Umlenkrolle U2 wird das Videoband über einen Capstan C und eine das Band B gegen den Capstan C drückende Andruckrolle A weiter zu einer Aufwickelspule W2 geführt. Auf der Kopftrommel KT sitzen zwei Videoköpfe K1 und K2, die sich gegenüberliegen, und ein Impulsgeber M für das Kopfumschaltsignal, der z.B. als Magnet ausgeführt sein kann. Dicht an der Kopftrom mel KT ist der Meßfühler S, eine Spule, angeordnet, damit zwischen ihr und dem Magneten M eine enge magnetische Kopplung erzielt wird Die in der Spule S induzierte Spannung wird über einen Verstärker V1 dem ersten Eingang eines Mikrocomputers MC zugeführt. Die vom Kontrollkopf KK bei Wiedergabebetrieb des Videorecorders abenommenen Steuersignale für den Bandservoregelkreis werden über einen Verstärker V2 an den zweiten Eingang des Mikrocomputers MC weitergeleitet. Bei Aufnahmebetrieb gibt der Mikrocomputer MC die später bei Wiedergabebetrieb erforderlichen Steuersignale für den Bandservoregelkreis über einen Verstärker V3 an den Kontrollkopf KK ab, der sie im Längsspurverfahren auf die separate Kontrollspu r schreibt. Der Mikrocomputer MC gibt an seinem Ausgang, der mit dem Steuereingang eines steuerbaren Umschalters U verbunden ist, das Kopfumschaltsignal ab. Der Videokopf K1 ist über einen Verstärker V4 mit dem Eingang des steuerbaren Umschalters U verbunden, während der andere Videokopf K2 über einen Verstärker V5 mit dem anderen Eingang des steuerbaren Umschalters U verbunden ist. Der Ausgang des steuerbaren Umschalters U, an den das FBAS-Signal, das Vertikal- und Horizontalsynchronsignal abnehmbar sind, ist mit dem Eingang einer Schaltung F zur Signalverarbeitung verbunden, deren Ausgang mit dem Eingang einer Schaltung Y zur Aufbereitung der Synchronsignale verbunden ist. Am einen Ausgang der Schaltung Y ist das aufbereitete Horizontalsynchronsignal HS, am anderen Ausgang der , mit dem dritten Eingang des Mikrocomputers MC verbunden ist, das aufbereitete Vertikalsynchronsignal VS abnehmbar. Das Kopfumschaltsignal am Ausgang des Mikrocomputers MC bewirkt, daß der Umschalter U betätigt und dadurch vom einen Videokopf auf den anderen umgeschaltet wird.

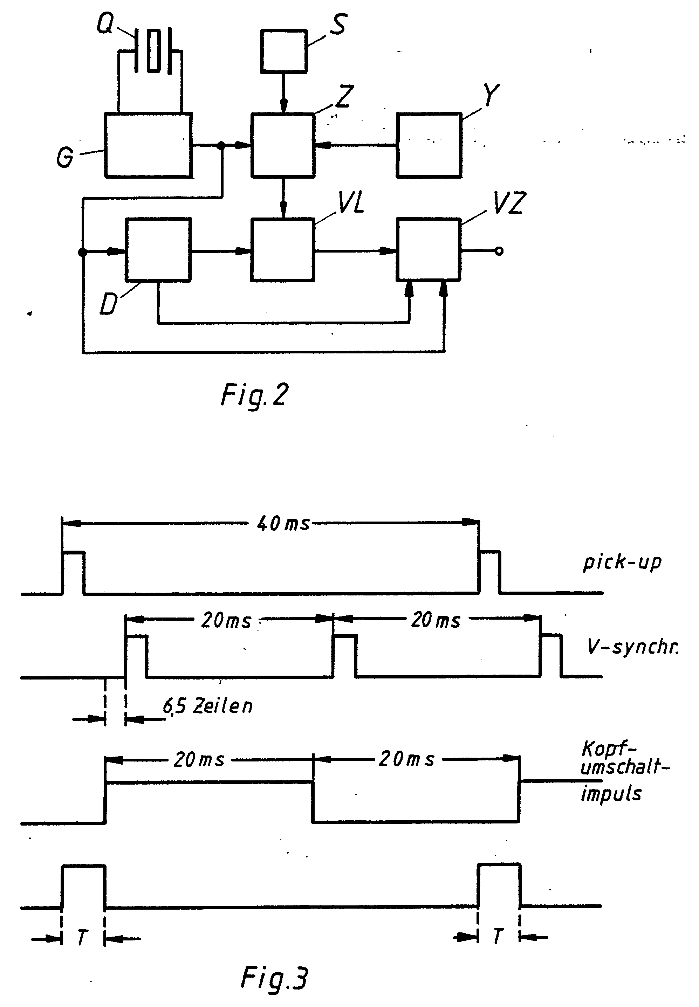

Anhand der in Figur 2 gezeigten Schaltungsanordnung, die den Teil zur Erzeugung des Kopfumschaltsignals im Mikrocomputer MC zeigt, und des in Figur 3 gezeigten Impulsdiagramms, wird erläutert, wie das Kopfumschaltsignal im richtigen Zeitpunkt an den steuerbaren Umschalter U gelegt wird, damit zum richtigen Augenblick vom einen Videokopf auf den anderen umgeschaltet wird.

In Figur 2 ist die als Meßfühler vorgesehene Spule S mit dem Rücksetz-Eingang eines Zählers Z verbunden, dessen Stop-Eingang mit dem Ausgang der Schaltungsanordnung Y zur Aufbereitung der Synchronsignale und dessen Takteingang mit einem Taktgenerator G verbunden ist. Der Ausgang des Zählers Z ist mit dem ersten Eingang eines Vergleichers VL verbunden, dessen zweiter Eingang mit dem ersten Ausgang eines Sollwertgebers D verbunden ist. Der Ausgang des Vergleichers VL ist mit dem ersten Eingang eines steuerbaren Verzögerungsgliedes VZ verbunden, an dessen Ausgang das Kopfumschaltsignal in Form eines Impulses, der im weiteren Verlauf als Kopfumschaltimpuls bezeichnet wird, abnehmbar ist. Der zweite Ausgang des Sollwertgebers D ist mit dem zweiten Eingang des steuerbaren Verzögerungsgliedes VZ verbunden. Der im Taktgenerator G mittels eines Quarzes Q erzeugte Takt wird dem Takteingang des Zählers Z, des Sollwertgebers D und des steuerbaren Verzögerungsgliedes VZ zugeführt.

Jedesmal wenn der auf der Kopftrommel sitzende Impulsgeber M einmal pro Umdrehung einen Spannungsimpuls in der als Meßfühler vorgesehenen Spule S induziert, erhält der Zähler Z an seinem Rücksetz-Eingang einen Impuls, den sogenannten Pick-Up-Impuls, der ihn auf Null zurücksetzt. Mit jedem Takt des Taktgenerators G wird nun der Zählerstand des Zählers Z um eins erhöht, bis er durch den Vertikalsynchronimpuls am Stop-Eingang angehalten wird. Dieser Zählerstand, der dem zeitlichen Abstand zwischen dem Pick-Up-Impuls und dem Vertikalsynchronimpuls entspricht, wird im Vergleicher VL mit dem Sollwertgeber D an den Vergleicher VL gelieferten Sollwert verglichen. Stimmen der Ist-Wert und der Soll-Wert nicht miteinander überein, so wird der Kopfumschaltimpuls im Verzögerungsglied VZ um soviele Takte verzögert, daß der zeitliche Abstand zwischen dem Kopfumschaltimpuls und dem Vertikalsynchronimpuls auf den Wert geregelt wird, der dem bei VHS-Systemen vorgeschriebenen Normabstand von von 6,5 Zeilen entspricht Stimmen der Soll-Wert und der Ist-Wert dagegen überein, so wird der Kopfumschaltimpuls unverzögert abgegeben. Allerdings ist in diesem Fall der Regelbereich unsymmetrisch. Es ist daher sinnvoll, den Pick-Up-Impuls zeitlich so zu legen, daß der Kopfumschaltimpuls auch be Übereinstimmung des Ist-Wertes mit dem Soll-Wert um eine vorgebbare Anzahl von Takten verzögert wird, weil dadurch der Regelbereich symmetrisch wird und die für einen unsymmetrischen Regelbereich charakterisitschen Nachteile vermieden werden.

Das Diagramm in Figur 3 zeigt die Pick-Up-Impulse, deren ze itlicher Abstand 40ms beträgt, die Vertikalsynchronimpulse, deren Abstand im Idealfall 20ms beträgt, und den Kopfumschaltimpuls. Der Mikrocomputer MC wertet jedoch nur jeden zweiten Vertikalsynchronimpuls aus, so daß der Abstand zweier aufeinander folgender auszuwertender Vertikalsynchronimpulse ebenfalls wie bei den Pick-Up-Impulsen 40ms beträgt. Symbolisch ist ausserdem angedeutet, um welche Zeit T das Verzögerungsglied VZ den Kopfumschaltimpuls verzögert. Der Kopfumschaltimpuls hat bei dem angegebenen Ausführungsbeispiel eine Länge von 20ms, auf ihn folgt eine ebenso lange Impulspause. Dadurch, daß bei jeder Umdrehung der Kopftrommel die Zeit zwischen dem Pick-Up-Impuls und dem Vertikalsynchronimpuls gemessen und mit dem Sollwert verglichen wird, erscheint der Kopfumschaltimpuls stets zum richtigen Zeitpunkt. Deshalb wirkt sich die allmähliche Abnahme der magnetischen Feldstärke bei magnetischen Impulsgebern ebenso wie die stete Verschlechterung des Wirkungsgrades bei optischen Impulsgebern und optischen Meßfühlern infolge Alterung auf die Lage des Kopfumschaltimpulses nicht mehr aus. Regelmäßige Neueinstellungen des Videorecorders in der Werkstatt entfallen daher. Ausserdem bietet der erfindungsgemäße Videorecorder den Vorteil, daß mit ihm auch noch Bänder abgespielt werden können, deren Vertikalsynchronimpulse die vorgeschriebenen Toleranzen bis zu einem bestimmten Maß überschreiten.

Eine erste Weiterbildung des erfindungsgemäßen Videorecorders besteht darin, daß bei dauerndem Ausfall des Vertikalsynchronsignals der Kopfumschaltimpuls um so viele Takte verzögert wird, wie es bei Aufnahmebetrieb der Fall ist.

Eine zweite Weiterbildung ist darin zu sehen, daß bei nur kurzen Ausfällen des Vertikalsynchronsignals, die jeweils dem Signalausfall vorangehende Verzögerungszeit des Kopfumschaltimpulses solange beibehalten wird, bis der Signalausfall beendet ist.

Die gesamte Anordnung aus dem Taktgenerator G, dem Zähler Z, dem Sollwertgeber D, dem Vergleicher VL und dem steuerbaren Verzögerungsglied VZ läßt sich besonders leicht in einem Mikrocomputer realisieren. Aus dem Vergleich des Ist-Wertes mit dem Soll-Wert im Vergleicher VL läßt sich ein Kriterium für die Regelung der Bandgeschwindigkeit ableiten. Bei diesem Ausführungsbeispiel des erfindungsgemäßen Videorecorders wird die Drehzahl des Bandantriebsmotors und dadurch die Bandgeschwindigkeit so geregelt, daß der Kopfumschaltimpuls wie vorgeschrieben 6,5 Zeilen vor dem Vertikalsynchronimpuls erscheint. Eine Kombination von beidem, Regelung und Bandgeschwindigkeit und Verzögerung des Kopfumschaltimpulses, ist ebenfalls möglich, um den Kopfumschaltimpuls zum richtigen Zeitpunkt zu erzeugen.

Die Funktion des erfindungsgemäßen Videorecorders wurde zwar an einem Gerät erklärt, das der VHS-Norm entspricht, jedoch ist die Erfindung nicht auf das VHS-System beschränkt. Sie läßt sich bei allen Systemen verwirklichen, bei denen der Kopfumschaltimpuls eine vorgegebene Zeit vor dem Vertikalsynchronimpuls erzeugt werden muß.

**Ansprüche**

1. Verfahren zur Erzeugung des Kopfumschaltsignales für Videorecorder mit einer von einem Magnetband (B) teilweise umschlungenen, Videoköpfe (K1, K2) tragenden rotierenden Kopftrommel (KT), mit mindestens einem auf der Kopftrommel (KT) sitzenden Impulsgeber (M) und mindestens einem Meßfühler (S) zur Erzeugung des Kopfumschaltsignales, das die Umschaltung von einem Videokopf auf den anderen bewirkt, und mit einem Kontrollkopf (KK) zum Abtasten des Vertikalsynchronsignales bei Wiedergabe, **dadurch gekennzeichnet,** daß bei Wiedergabebetrieb die Zeit zwischen dem vom Meßfühler (S) gelieferten Signal und dem Vertikalsynchronsignal gemessen und mit einem Sollwert verglichen wird und daß aus dem Vergleich ein Kriterium für die Regelung der zeitlichen Lage des Kopfumschaltsignales gewonnen wird.

2. Verfahren nach Anspruch 1, **dadurch gekennzeichnet,** daß die Regelung der zeitlichen Lage des Kopfumschaltsignales dadurch erfolgt, daß das aus dem Vergleich gewonnene Kriterium zur Regelung der Bandgeschwindigkeit dient.

3. Verfahren nach Anspruch 1, **dadurch gekennzeichnet,** daß die Regelung der zeitlichen Lage des Kopfumschaltsignales derart erfolgt, daß das aus dem Vergleich gewonnene Kriterium dazu dient, das Kopfumschaltsignal um regelbare Zeiten nach dem Signal des Meßfühlers (S) aber vor dem Vertikalsynchronsignal zu erzeugen.

4. Verfahren nach Anspruch 3, **dadurch gekennzeichnet,** daß die zeitliche Lage des vom Meßfühler (S) gelieferten Signals so gewählt ist, daß bei Wiedergabe einer normgerechten Aufnahme vom Magnetband das Kopfumschaltsignal in der Mitte des Zeitintervalls zwischen dem vom Meßfühler (S) gelieferten Signal und dem Vertikalsynchronsignal liegt.

5. Verfahren nach Anspruch 3 oder 4, **dadurch gekennzeichnet,** daß das vom Meßfühler (S) erzeugte Signal impulsförmig ist und dem Rücksetzeingang eines Zählers (Z) zugeführt wird, daß dem Stop-Eingang des Zählers (Z) das impulsförmige Vertikalsynchronsignal zugeführt wird, daß der Ausgang des Zählers (Z) mit dem ersten Eingang eines Vergleichers (VL) verbunden ist, daß der zweite Eingang des Vergleichers (VL) mit dem Ausgang eines Sollwertgebers (D) verbunden ist, daß der Ausgang des Vergleichers (VL) mit dem Steuereingang eines steuerbaren Verzögerungsgliedes (VZ) verbunden ist, an dessen Ausgang das impulsförmige Kopfumschaltsignal abnehmbar ist, und daß der Ausgang eines Taktgenerators (G) mit dem Takteingang des Zählers (Z), des Sollwertgebers (D) und des steuerbaren Verzögerungsgliedes (VZ) verbunden ist.

6. Verfahren nach Anspruch 5, **dadurch gekennzeichnet,** daß bei kurzen Ausfällen des Vertikalsynchronsignals die dem Signalausfall vorangegangene zeitliche Lage des impulsförmigen Kopfumschaltsignals beibehalten wird.

7. Verfahren nach Anspruch 6, **dadurch gekennzeichnet,** daß bei dauerndem Ausfall des Vertikalsynchronsignals das impulsförmige Kopfumschaltsignal zum gleichen Zeitpunkt wie bei Aufnahmebetrieb erzeugt wird.

## Claims

1. A method of producing the head-switching signal for video recorders having a rotary head drum (KT) partly looped by a magnetic tape (B) and supporting video heads (K1, K2), having at least one pulse generator (M) sitting on the head drum (KT) and at least one measuring sensor (S) for producing the head-switching signal, which causes the switchover from one video head to the other, and having a checking head (KK) for scanning the vertical synchronous signal during playback, **characterised in that,** upon playback, the time between the signal delivered by the measuring sensor (S) and the vertical synchronous signal is measured and compared with a desired value and that from the comparison a criterion is obtained for controlling the time position of the head-switching signal.

2. A method according to claim 1, **characterised in that** the control of the time position of the head-switching signal takes place by the criterion obtained from the comparison serving to control the tape speed.

3. A method according to claim 1, **characterised in that** the control of the time position of the head-switching signal takes place such that the criterion obtained from the comparison serves to produce the head-switching signal at controllable times after the signal of the measuring sensor (S) but before the vertical synchronous signal.

4. A method according to claim 3, **characterised in that** the time position of the signal delivered by the measuring sensor (S) is selected so that when playing back a standard recording from the magnetic tape the head-switching signal lies in the middle of the time interval between the signal delivered by the measuring sensor (S) and the vertical synchronous signal.

5. A method according to claim 3 or 4, **characterised in that** the signal produced by the measuring sensor (S) is pulse-shaped and supplied to the resetting input of a counter (Z), that the pulse-shaped vertical synchronous signal is supplied to the stop input of the counter (Z), that the output of the counter (Z) is connected to the first input of a comparator (VL), that the second input of the comparator (VL) is connected to the output of a desired value generator (D), that the output of the comparator (VL) is connected to the control input of a controllable delay element (VZ), at the output of which the pulse-shaped head-switching signal may be tapped, and that the output of a clock pulse generator (G) is connected to the clock pulse input of the counter (Z), of the desired value generator (D) and of the controllable delay element (VZ).

6. A method according to claim 5, **characterised in that** during short failures of the vertical synchronous signal the time position of the pulse-shaped head-switching signal which preceded the signal failure is retained.

7. A method according to claim 6, **characterised in that** during lasting failure of the vertical synchronous signal the pulse-shaped head-switching signal is produced at the same point in time as during recording.

## Revendications

1. Procédé d'élaboration du signal de commutation des têtes de magnétoscopes comportant un tambour porte-têtes rotatif (KT), portant des têtes vidéo (K1, K2), partiellement entouré par une bande magnétique (B), au moins un émetteur d'impulsions (M), monté sur le tambour porte-têtes (KT), et au moins un capteur (S) servant à l'élaboration du signal de commutation des têtes, provoquant la commutation d'une tête vidéo sur l'autre, et une tête de service (KK) servant à l'exploration du signal de synchronisation verticale lors de la lecture, caractérisé en ce qu'en fonctionnement en lecture, on mesure le temps entre le signal délivré par le capteur (S) et le signal de synchronisation verticale et on le compare à une valeur de consigne, et que l'on obtient par la comparaison un paramètre pour le réglage de la position temporelle du signal de commutation des têtes.

2. Procédé selon la revendication 1, caractérisé en ce que le réglage de la position temporelle du signal de commutation des têtes est réalisé en se servant du paramètre obtenu par la comparaison afin de régler la vitesse de défilement de la bande.

3. Procédé selon la revendication 1, caractérisé en ce que le réglage de la position temporelle du signal de commutation des têtes est réalisé en se servant du paramètre obtenu par la comparaison afin de générer le signal de commutation des têtes des laps de temps réglables après le signal du capteur (S) cependant avant le signal de synchronisation verticale.

4. Procédé selon la revendication 3, caractérisé en ce que la position temporelle du signal délivré par le capteur (S) est choisie de façon à ce que, lors de la lecture d'une bande magnétique enregistrée conformément aux normes, le signal de commutation des têtes soit situé au milieu de l'intervalle de temps entre le signal délivré par le capteur (S) et le signal de synchronisation verticale.

5. Procédé selon la revendication 3 ou 4, caractérisé en ce que le signal élaboré par le capteur (S) est impulsionnel et qu'il est alimenté à l'entrée de remise à zéro d'un compteur (Z), qu'à l'entrée d'inhibition du compteur (Z) est appliqué le signal impulsionnel de synchronisation verticale, que la sortie du compteur (Z) est reliée à la première entrée d'un comparateur (VL), que la deuxième entrée du comparateur (VL) est reliée à la sortie d'un émetteur de valeur de consigne (D), que la sortie du comparateur (VL) est reliée à l'entrée de commande d'un élément de retard commandé (VZ), à la sortie duquel on prélève le signal impulsionnel de commutation des têtes, et que la sortie d'un générateur de signaux d'horloge (G) est reliée à l'entrée de signaux d'horloge du compteur (Z), de l'émetteur de valeur de consigne (D) et de l'élément de retard commandé (vz).

6. Procédé selon la revendication 5, caractérisé en ce qu'en cas de disparitions brèves du signal de synchronisation verticale, on maintien la position temporelle précédente du signal impulsionnel de commutation des têtes.

7. Procédé selon la revendication 6, caractérisé en ce qu'en cas de disparition durable du signal de synchronisation verticale, le signal impulsionnel de commutation des têtes est généré au même moment que lors de l'enregistrement.

Fig.1

Fig.2

Fig.3